# EUROPEAN PATENT APPLICATION

(11) **EP 2 789 735 A1**
(43) Date of publication of application: **15.10.2014**
(21) Application number: 13162755.6
(22) Date of filing: 08.04.2013
(51) Int. Cl.: D21H 27/26, B44C 5/04, D21H 27/28, D21H 17/31, D21H 17/67, D21H 17/00, D21H 19/38, D21H 19/56, D21H 21/52, B32B 29/04

(54) **Method for manufacturing coated panels and coated panel**

(71) Applicant: Unilin BVBA, 8710 Wielsbeke (BE)
(72) Inventor: Meirlaen, José, 9800 Deinze (BE)
(74) Representative: Schacht, Benny Marcel Corneel

(57) **Abstract**

Method for manufacturing coated panels of the type having a top layer (1), which comprises at least one carrier sheet (3) soaked in resin (2) and a printed decor (6) or a coloration, wherein hard particles (9) are incorporated into the top layer (1), which are situated above said printed decor (6) or coloration, wherein the method comprises the step of providing a suspension or dispersion, which comprises at least a portion of said hard particles (9), at the upper side (7) of said carrier sheet (3), characterized in that said suspension or dispersion comprises xanthan gum.

## Description

This invention relates to a method for manufacturing coated panels, as well as to coated panels. More particularly, the invention relates to a method for manufacturing floor panels or furniture panels, as well as to floor panels and furniture panels.

In particular, the invention relates to a method for manufacturing laminate panels, such as floor panels or furniture panels, of the type comprising a top layer on the basis of at least one carrier sheet soaked in resin, for example, of paper. Laminate panels of this type may be realized in a variety of manners. For example, they may be realized by means of a DPL (Direct Pressure Laminate) technique, wherein this resin-soaked carrier sheet, possibly together with one or several other resin-soaked carrier sheets, is consolidated at an increased temperature and pressure, by means of a press element, on a basic board, such as a MDF or HDF (Medium Density Fiberboard or High Density Fiberboard) board. Laminate panels may also be realized, for examples, by means of a HPL (High Pressure Laminate) technique, wherein the resin-soaked carrier sheet is consolidated with other resin-soaked carrier sheets, after which the top layer obtained in this manner then is provided on a basic board.

In a DPL technique as well as in a HPL technique, the laminate panels comprise a printed decor obtained by means of a print or coloration, which usually is provided at least on or in one of said carrier sheets and which determines the appearance of the decorative side of the panels.

It is known to apply hard particles, such as aluminum oxide, also called corundum, in the top layer of such floor panels or furniture panels, with the intention of forming a wear-resistant layer above said printed decor or said print. Generally, it is assumed that, the larger the average size of the hard particles, the better the wear resistance of the obtained panels. However, panels comprising such large particles at their surface still have a high risk of developing scratches.

The tests describing scratch resistance and wear resistance are well known to those skilled in the art. For example, in laminate floor panels, wear resistance as a standard is measured as a number of revolutions, IP value (initial wear point), that a grinding wheel must perform before the printed decor of the laminate floor panel is affected, such as described in EN 13329 Annex E, also called Taber test. Scratch resistance is determined by visually determining the visibility of scratches that are provided in the surface with a standard needle tip with differing pressure force. The larger the required pressure force for forming a visible scratch, the larger the scratch resistance of the surface. Polishing sponges are also applied for the visual evaluation of scratches. It is clear that it is not required for a scratch that the printed decor as such is affected. A mere damage of the resin of the top layer is sufficient.

In the meantime, it is known from BE 1 015 862 and EP 2 026 968, with the intention of obtaining an improved scratch resistance, to apply small particles, such as nano-particles, in laminate floor panels.

From the state of the art, various methods are known for applying hard particles. However, these methods, for example, the one known from WO 98/47705, are insufficient for applying hard nano-particles.

From EP 2 288 500 B1 and EP 2 026 968 it is known to use a dispersion of silane treated nano-silica particles in the top layer of laminate panels to obtain an improved scratch resistance.

It is difficult to apply a suspension containing micro and nano-particles in a uniform manner. Clustering of small hard particles was often witnessed, leading to white spots in the laminate surface where the particles gather and to reduced scratch and wear resistance where the particles are absent.

The method of the present invention aims at an efficient and good manner of manufacturing a coated panel, preferably a laminate panel of the DPL or HPL type having an acceptable scratch resistance. In particular, this relates to laminate floor panels and laminate furniture panels. To this aim, the invention relates to a method for manufacturing coated panels of the type having a top layer, which comprises at least one carrier sheet soaked in resin and a printed decor or a coloration, wherein hard particles are incorporated into the top layer, which are situated above said printed decor or coloration, wherein the method comprises the step of providing a suspension, which comprises at least a portion of said hard particles, at the upper side of said carrier sheet, with as a characteristic that said suspension comprises xanthan gum.

The use of xanthan gum as a constituent to a suspension or dispersion comprising hard particles, especially small particles like micro and/or nano-particles opens up several new ways of applying such particles that reduce the risk of particle clustering. For example, thanks to the xanthan gum the suspension can be made thicker, or with a higher viscosity, such that application by means of dosing rollers, such as raster rollers, anilox rollers or screen rollers, becomes possible and reliable. Raster rollers and anilox rollers are rollers that have excavations on their circumference, wherein each excavation can transport an amount of suspension or dispersion to the object to be coated. The uniform geometry of the excavations gives rise to a uniform application of the suspension or dispersion, and thus of the hard particles. Without xanthan gum as a constituent in the suspension or dispersion, it would be practically impossible to apply the nano-particles by means of dosing rollers.

The inventor has found that the present of xanthan gum has no or only a minimal effect on the transparency of the melamine resin, after the total cure of the resin.

Preferably said suspension or dispersion comprises 20 to 60 wt% of hard particles, such as silica particles, 20 to 60 wt% of water and/or ethanol and 0,02 to 0,5 wt% of xanthan gum. The inventors have recognized that this limited addition of xanthan gum has a tremendous effect on the swiftness of the process, especially when dosing rollers, such as raster rollers and/or anilox rollers are used for its application. Preferably said suspension is free of resin, such as melamine resin or other thermohardening resins, or at least contains less than 5 wt% of such resin. By minimizing the amount of resin contained in the suspension or dispersion, it is obtained that the hard particles will be closer to the surface of the treated carrier sheet and a better scratch resistance will be attainable.

Preferably, the method comprises at least the step of forming a carrier sheet, which is provided with a resin coating, such that this at least partially resin-treated or resin-pre-treated carrier sheet has an amount of resin at least at the side intended to form the upper side thereof, and wherein said hard particles are applied at the upper side of said already resin-pre-treated carrier sheet. In the case that the top layer comprises several carrier sheets, the aforementioned carrier sheet preferably relates to the carrier sheet situated closest to the upper side of the panel. In the case that the coated panel comprises a coloration, this latter preferably is applied by means of a colored carrier sheet, whether or not corresponding to the above-mentioned carrier sheet upon which the suspension is provided. In the case that the coated panel comprises a printed decor, this latter preferably is applied by means of printed carrier sheet, whether or not also corresponding to the above-mentioned carrier sheet upon which the suspension is provided.

By "nano-particles" generally particles are meant with an average size of less than 1 micrometer. However, according to the invention preferably particles are applied with an average size between 20 and 700 nanometers, and still better between 50 and 200 nanometers.

By "hard particles", particles are meant that are harder than the aforementioned resin. Preferably, particles are applied consisting of a material with wear-resistant properties, such as ceramic particles, for example, particles chosen from the group of aluminum oxide (Al203), silicon carbide (SiC), titanium oxide (TiO2), boron carbide (B4C), tungsten carbide (WC) and silicon dioxide (SiO2). Aluminum oxide is a particularly suitable material, as this material has approximately the same refractive index as melamine resin, which latter typically can be applied in the manufacture of a laminate panel. In comparison to many other ceramic particles, aluminum oxide particles have a smaller influence on the visibility of the underlying printed decor or the underlying coloration. Another example of a material with wear-resistant properties is silica or SiO₂. In connection to the invention, a good alternative to nano-particles of aluminiumoxide or nano-silica particles.

The inventor has found that applying the hard nano-particles in suspension on the upper side of an already resin-pre-treated carrier sheet results in less tendency of these nano-particles to agglomerate, such that a more uniform distribution of the particles is achieved and a corresponding better scratch resistance of the surface is created. An additional advantage is that the risk of nano-particles migrating to underlying layers is reduced.

However, the inventor has also found that advantages may also be achieved when, instead of nano-particles, use is made of micro-particles with an average grain size smaller than 30 micrometers and preferably larger than 5 micrometers, wherein said suspension then, instead of a portion of the nano-particles, comprises at least a portion of the micro-particles. The smaller the particles, the more pronounced the obtained uniformity of the distributed particles over the surface and the smaller the tendency to migrate towards underlying layers. However, with larger particles, such as the above-mentioned micro-particles, a better wear resistance of the surface is obtained.

It is noted that it is not excluded that one works with a mixture of hard particles partially consisting of nano-particles and partially consisting of micro-particles, whether or not consisting of the same material, wherein this mixture then is provided in said suspension.

According to a first important embodiment of the method, said carrier sheet relates to a so-called overlay, which is situated in the final panel, floor panel or furniture panel, as an at least partially transparent or translucent layer above the printed decor or the coloration. This overlay may substantially consist, for example, of alpha cellulose and, without resin treatment, have a weight between 10 and 40 gram/m², and still better between 20 and 25 gram/m². In this first important form of embodiment, the carrier sheet is pretreated with resin and the resin-pre-treated carrier sheet is in dry condition, this is a condition in which the residual moisture content is approximately 6%, preferably has a weight between 100 and 180 gram/m², and still better between 25 and 150 gram/m². In this manner is obtained that the carrier sheet is completely soaked, however, not over-saturated, and that a good adherence of the nano-particles or micro-particles as well as of underlying layers, such as a possible basic board in the case of a DPL technique, may be achieved.

According to a particular possibility of this first embodiment, the carrier sheet may relate to a so-called overlay, wherein this overlay substantially consists of an alpha cellulose paper, in which during the production of the paper hard particles, such as aluminum oxide and/or glass fibers and/or glass spheres, are integrated. It is clear that the application of such carrier sheet effects an even better tear resistance. According to a second important embodiment of the method, said carrier sheet has a print or coloration forming said printed decor or said coloration. Preferably, this relates to a so-called decor paper preferably having, without resin treatment, a weight between 55 and 100 or even up to 150 gram/m² and still better between 70 and 90 gram/m². In order to obtain that the carrier sheet is completely soaked, however, not over-saturated, the carrier sheet is resin-pre-treated and in this case preferably has a weight of 120 to 200 gram/m2, and still better from 130 to 170 gram/m2. The heavier decor papers, these are the decor papers with a resin-untreated weight of more than 100 gram/m², preferably are used with furniture panels.

According to these two important embodiments, the possible step of forming a resin-pre-treated carrier sheet consists preferably at least of the metered application of resin, for example, by means of a metering device, such as metering rolls. In this step, then, whether or not in combination with said metering device, resin may be applied by means of a spraying device or the like.

It is not excluded that during the manufacture of the floor panel or furniture panel, whether or not during the step of forming a resin-pre-treated carrier sheet, also hard particles are applied in the top layer on a location where, in the final panel, they are situated above the printed decor or coloration, however, below the aforementioned nano-particles or micro-particles applied by means of said suspension. These hard particles preferably have a larger average size of said nano-particles, micro-particles, respectively. An average size between 20 and 200 micrometers or between 30 and 180 micrometers, and still better between 60 and 160 micrometer is recommended for obtaining a good wear resistance in combination with an acceptable visibility of the printed decor or the coloration.

The hard particles situated below the nano-particles or micro-particles, which latter have been applied by means of a suspension, preferably are situated in a resin layer and/or preferably are applied in a separate step. In the case of said first important embodiment, these hard particles preferably are applied at the side of the carrier sheet that is intended to form the underside thereof. Then, these larger particles, as aforementioned, provide for a higher wear resistance of the surface of, for example, a laminate floor panel, without, however, having an influence on the step of applying the suspension. For the hard particles applied in this step, however, any material may be applied that is harder than the material of the top layer. Preferably, the same material is applied as that of the nano-particles or micro-particles still to be applied, however, one may also opt for another, preferably ceramic material.

Said hard particles situated below the nano-particles or micro-particles deposited by means of a suspension may also be integrated in a carrier sheet itself, for example and preferably in said carrier sheet. In the case of a paper carrier sheet, this means that the hard particles are taken up into the paper itself.

Before providing said suspension, the possibly obtained resin-pre-treated carrier sheet preferably is dried up to a residual moisture content of maximum 20%, and still better of maximum 15%. By introducing this drying treatment is obtained that the risk that the subsequently-applied suspended nano-particles will sink down into the resin that is already present at the upper side of the resin-pre-treated carrier sheet and that the deposited nano-particles will be present as good as possible in the top portion of the top layer of the final panel. They will function best as scratch-retarding components if present at the surface of the floor panel or furniture panel. With such method can be obtained that a uniform distribution of hard nano-particles is present at least in the first 2 to 5 micrometers underneath the surface of the panel. In these first 2 to 5 micrometers a very high concentration of nano-particles may be obtained; an amount of more than 50 volume percent of nano-particles in this layer is not excluded. The amount of nano-particles may even rise up to more than 85 volume percent. In the case that one works with micro-particles instead of nano-particles, generally one attempts that the micro-particles are present at the surface of the final panel in a concentration between 2 and 20 grams per square meter, and still better in a concentration between 5 and 15 grams per square meter, such as, for example, approximately 10 grams per square meter. With micro-particles, too, it is of importance that they are present at the surface of the coated panel, preferably a number of micro-particles herein forms a hard portion projecting at the surface, which still better is not or hardly covered by the remaining ingredients of the suspension. The inventor has found that the presence of such projecting portions of micro-particles effects a very good wear and scratch resistance, whereas the possibly damage to or wear of the press plate or other press element used in the manufacture of the panel may be restricted by limiting the average grain size of the micro-particles, for example, to 30 micrometers or less. Preferably such projecting portions are present at the surface at least in a concentration of 50 to 80 per square centimeter; still better, concentrations of 100 to 1000 projecting portions per square centimeter are accomplished.

For the suspension to be applied preferably use is made, apart from the aforementioned hard nano-particles or micro-particles and the aforementioned xanthan gum, at least of water. According to the desired effect, a variety of mixing ratios are possible.

In a first example, a water-dissolved mixture of solids may be applied, wherein said mixture comprises at least 50 percent by weight and still better at least 70 percent by weight of the respective particles. This mixture has in particular advantages when the suspension comprises nano-particles. Particularly good results may be obtained with a mixture comprising 90 percent by weight and more of nano-particles. In the mixture of solids, use may be made of 10 percent by weight solid resin. This mixture then preferably is mixed with water until a suspension is obtained consisting for at least 30% of said mixture of solids, however, preferably consisting for at least 45% or at least 50% of said mixture. To this mixture 0,05 to 0,2 % of xanthan gum is added.

In a second example, a water-dissolved mixture of solids may be used, wherein this mixture then comprises less than 30 percent by weight, and still better less than 20 percent by weight of the respective particles. This mixture has in particular advantages when the suspension contains micro-particles. Particularly good results may be obtained with a mixture containing only 10 percent by weight or less of micro-particles. In this mixture of solids, use may be made of 35 percent by weight solid resin. This mixture then preferably is diluted with water until a suspension is obtained consisting for at least 30% of said mixture of solids, however, preferably even consisting for at least 45% or at least 50% of said mixture. To this mixture 0,05 to 0,2 % of xanthan gum is added.

It is noted that instead of water-dissolved mixtures, mixtures may be used which are dissolved by means of other solvents, such as by means of ethanol, or a mixture of ethanol and water.

As a resin possibly comprised in the suspension, albeit to a minimal extent, preferably a thermo-hardening amino resin, such as a melamine resin, is applied. However, it is not excluded that at least for the suspension use is made of a thermoplastic resin.

In the suspension further dispersing agents known as such may be applied, which promote maintaining the nano-particles or micro-particles in suspension. Other possible components for the suspension are silane, butane diol, epsilon-caprolactam, polyglycolene and other similar materials. These agents are known as such as modifying materials for amino resins. Preferably, the suspension is substantially or entirely free of cellulose or aliyhow comprises at least less than 5 percent by weight, or still better less than 1 percent by weight cellulose. Avoiding or minimizing the cellulose portion in the suspension results in a better transparency of the obtained top layer. This is in particular of importance when using larger particles, such as the aforementioned micro-particles. Namely, micro-particles as such may entrain a substantial opaqueness of the top layer.

For applying the suspension, in principle any depositing or application system may be used, however, preferably use is made of at least one of the following possibilities:
- a metering device;
- a spreading device at least by means of a knife;
- an application device with at least a wire doctor roll and/or raster roller and/or anilox roller;
- an application device with at least a so-called air knife;
- an application device by means of rolls and knives.

It is noted that the above depositing or application systems offer superior uniformity of the applied hard particles, especially in the case of nano-particles. This is enabled by means of the xanthan gum.

Preferably, the suspension is applied in an application device arranged in line with a device that is used during said possible step of forming the resin-pre-treated carrier sheet. To this aim, an extra station may be provided on a standard impregnation channel. Preferably, said application device, seen in the flow direction of the carrier sheet, is situated after a drying station or oven.

Generally, it is preferable that, when performing a method according to the invention, at least two drying installations or ovens are used and that between these two drying installations, an application device is situated, by means of which at least a portion and preferably the entire aforementioned suspension with nano-particles or micro-particles is provided. In this manner is obtained that the residual moisture content of said resin-pre-treated carrier sheet is restricted by means of the first drying installation before the suspension is applied and that, after applying the suspension, the carrier sheet can be dried further in the second drying installation to a residual moisture content of maximum 10%, and still better maximum 7%. Of course, this second drying step may also be performed on another line or separately.

It is clear that the present invention also relates to a coated panel, such as a floor panel or a furniture panel, which is obtained or can be obtained by using a method with the characteristics of this first aspect.

With the intention of better showing the characteristics of the invention, hereafter, as an example without any limitative character, several preferred forms of embodiment are described, with reference to the accompanying drawings, in which:
Figure 1 represents a method according to the invention;
Figure 2 represents a variant of such method for the area indicated by F2 in figure 1;
Figures 3 and 4 represent a cross-section through the top layer of a panel, in this case a floor panel, manufactured by such method, wherein figure 4, at a larger scale, represents a view of the area indicated by F4 in figure 3; and
Figures 5 through 9 represent further examples of such panels.

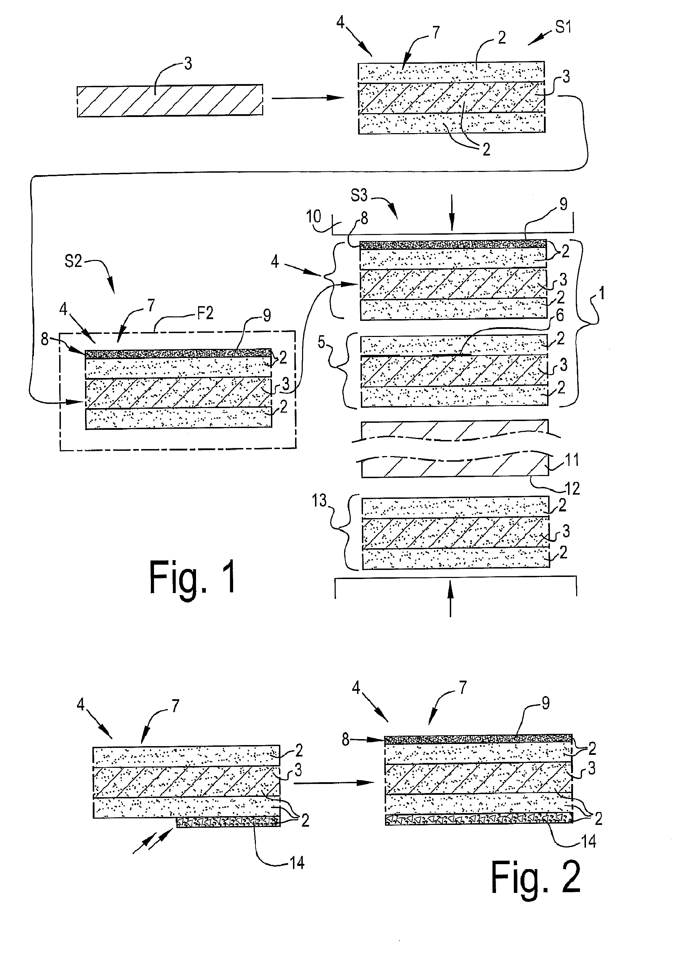

Figure 1 represents various steps in a method of manufacturing a coated panel, in this case a floor panel. Herein, this relates to a laminate floor panel with a top layer 1, which, amongst others, is constructed of two carrier sheets 3 soaked in resin 2. A first carrier sheet 3, provided with resin 2, forms a so-called overlay 4 and, in the example, is intended for forming the upper side of the floor panel to be manufactured. This overlay 4 extends on top of a second carrier sheet 3, which, provided with resin 2, forms a decor layer 5, also called decor paper. To this aim, the second carrier sheet 3 has a print 6 forming said printed decor. It is clear that, within the scope of the invention, one may also work with a colored carrier sheet instead of a printed carrier sheet as a decor layer.

Figure 1 clearly shows that, in this preferred embodiment, the first carrier sheet 3, which is intended to form the overlay 4, in a first step S1 is provided with resin 2, such that this carrier sheet 3 has an amount of resin 2 at least at its upper side 7. In the present case, the carrier sheet 3 has been completely saturated with the resin 2 and shows an amount of resin 2 at its underside, too. In a second step S2, a suspension 8 comprising hard nano-particles 9 and xanthan gum, in this case particles of silica or SiO₂, is provided at the upper side 7 of the already resin-treated first carrier sheet 3 or overlay 4, said suspension preferably meeting one or more of the specifications described in the introduction. It is clear that the suspension 8 herein may be applied in any manner, for example, pursuant to the techniques described in the introduction, however preferably by means of one or more dosing rollers, such as raster rollers or anilox rollers. It is also clear that the hard nano-particles 9 also may be replaced by the micro-particles mentioned in the introduction.

For forming the laminate floor panel, in the example of figure 1 the DPL technique mentioned in the introduction is applied, wherein, as represented in step S3, said overlay 4, which in this case is already provided with a suspension 8, and said decor layer 5, by means of a press element 10, are consolidated on a base plate 11. In this case, at the underside 12 of the base plate 11, which, for example, may consist of a MDF or HDF board, also a carrier sheet 3 soaked in resin 2 is provided, said sheet forming a so-called balancing layer or backing layer 13.

It is noted that in step S3 preferably relatively large boards are formed, which subsequently may be sawn to or may be divided in any other manner into smaller panels, at which, in order to form the final floor panels, coupling means may be provided at the edges thereof.

It is clear that in this manner, floor panels are obtained comprising nano-particles at the upper surface, which, due to the fact that they are provided in a suspension containing xanthan gum, impart the advantages mentioned in the introduction to these floor panels.

It is noted that, according to a not represented variant, it is not excluded to apply the nano-particles by means of a suspension after the various layers already have been consolidated by means of the press element 10.

Figure 2 represents that, according to a variant, hard particles 14 may also been provided at the underside of the first carrier sheet 3 or overlay 4. These may also be provided by means of a resin suspension comprising xanthan gum and, as represented, preferably are of a larger average size than said nano-particles 9 or micro-particles.

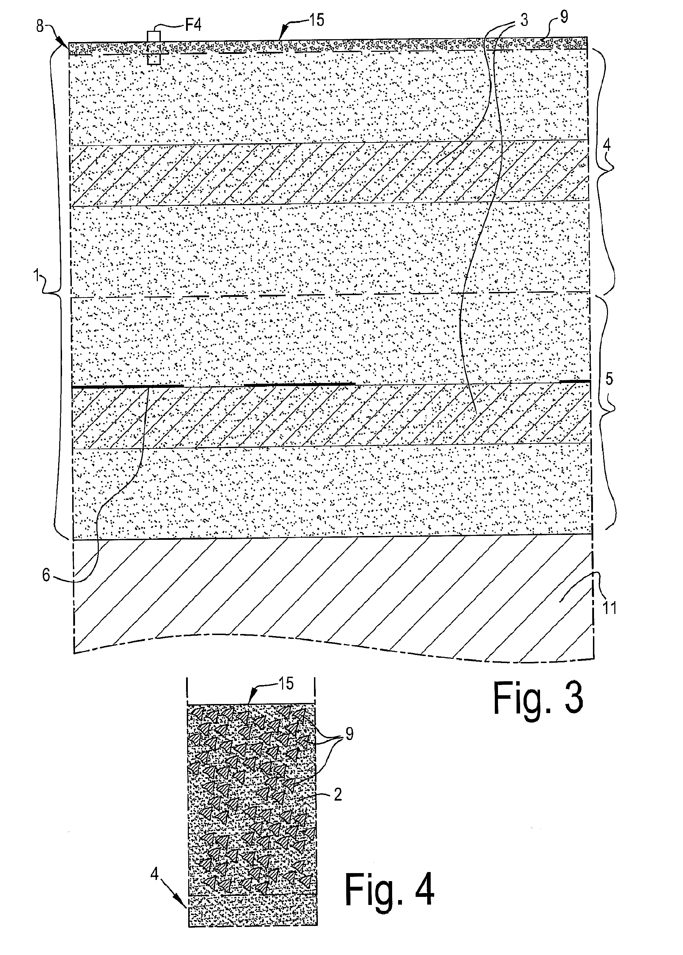

Figure 3 represents a cross-section through the top layer 1 of the laminate floor panel that is obtained by the method of figure 1. In this laminate floor panel, the surface 15 of the top layer 1 is formed by the nano-particles 9 provided in suspension 8. Figure 4 represents that particularly high concentrations of the nano-particles 9 may be reached at the surface 15 of a laminate floor panel, which are situated directly next to the upper surface of the floor panel and therefore are particularly effective.

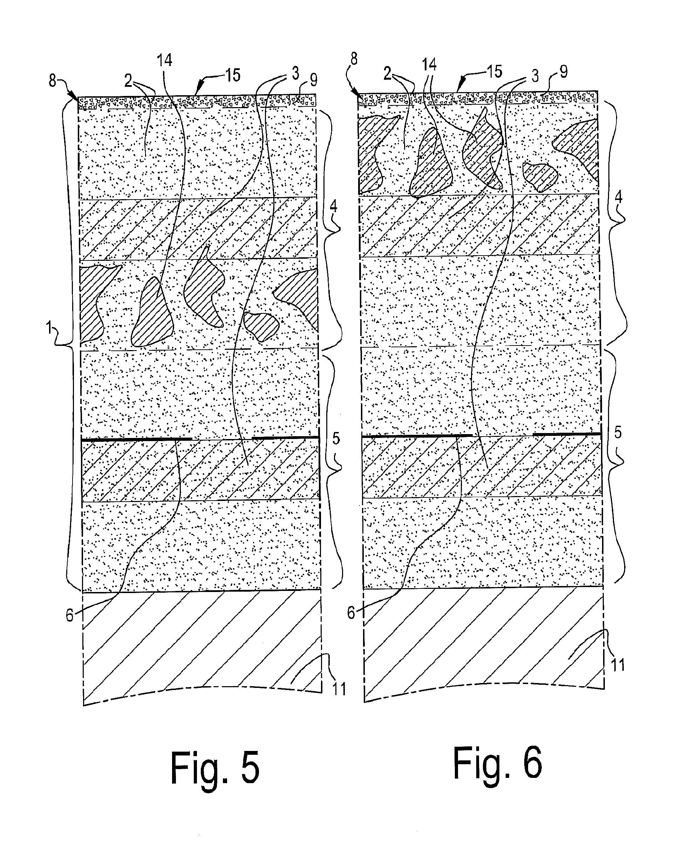

Figure 5 represents the result that may be obtained with the method of figure 2. It is clear that, when pressing the respective carrier sheets 3, a possible migration of the hard particles 9 and/or 14 and/or the applied resin 2 may occur. Figure 5, for example, represents that the resin 2 at the underside of the carrier sheet 3 of the overlay 4 and the resin 2, with which the particles 14 have been provided, migrate to a layer in which the particles 14 spread. An excessive migration of the nano-particles 9 or micro-particles to the underlying structure, as represented, preferably is avoided and may be prevented, for example, by applying said suspension 8 only after the resin-pre-treated carrier sheet 3 has dried somewhat.

Figure 6 represents another variant wherein larger hard particles 14 are present on top of the carrier sheet 3 of the overlay 4, however, wherein the surface 15 of the laminate floor panel still is formed substantially by said nano-particles 9 or micro-particles that are comprised in resin.

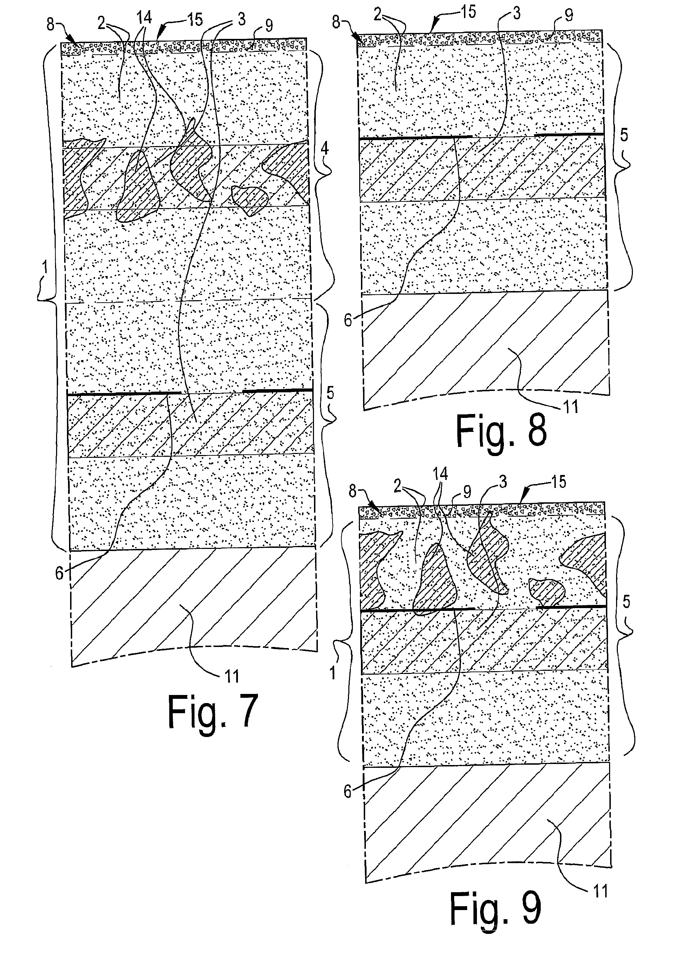

Figure 7 represents a variant, wherein hard particles 14 are present in the carrier sheet 3 of the overlay 4. This may be achieved, for example, when a carrier sheet 3 is applied wherein, in the production thereof, for example, the production of the paper of which this carrier sheet 3 is made, hard particles 14 are integrated therein.

Figure 8 represents a variant of a laminate panel, in this case a laminate floor panel, wherein the top layer 1 does not comprise any extra carrier sheets 3, such as overlays 4, above the print 6 or the printed decor. Figure 9 also shows such a variant, wherein, apart from the particles, more particularly nano-particles 9, provided in the suspension 8, also larger hard particles 14 are provided above the print 6 or the printed decor, which, however, are situated substantially underneath the particles provided in suspension, in this case, nano-particles 9. The embodiments represented in figures 8 and 9, as well as other embodiments in which no use is made of a carrier sheet in the form of a so-called overlay, are of particular importance for furniture panels. Due to the, in comparison to floor panels, less high requirements for wear resistance for furniture panels, an inexpensive acceptable solution may be offered by means of these embodiments. Of course, these embodiments are also of importance for floor panels.

The larger hard particles 14 in the example of the figures 5, 6, 7 and 9 preferably have an average size between 20 and 200 micrometers, and still better between 60 and 160 micrometers.

It is noted that the carrier sheets 3 in the represented examples are illustrated only schematically and that in reality the relation between the thickness of such carrier sheet and the overall thickness of the top layer may deviate from the relation applied in the figures. The same is valid for the represented dimensions of the hard particles 9 and 14. For not-restricting examples of practical dimensions of the particles 9 and 14, reference is made to the description in the introduction.

### Example:

The example describes a practical implementation of the method of the first aspect of the invention, wherein use is made of an overlay realized as is represented in figure 2.

For forming the resin-pre-treated carrier sheet, resin was applied on a 25 gram/m² overlay paper, consisting of alpha cellulose, by means of two successive impregnation steps.

In a first impregnation step, 50 gram/m² amino resin (K791 of BASF) was applied with metering rolls. This resin was applied in a liquid mixture comprising 65 parts of water per 100 parts solid amino resin matter.

Thereafter in a second impregnation step also 55 gram/m² of resin were applied on the underside of the overlay paper by means of a spraying device. This resin was applied by means of a suspension comprising, per 100 parts of solid amino resin matter, approximately 60 weight parts of aluminumoxide particles (silica) of an average size of approximately 65 micrometers and 65 parts of water.

After the aforementioned two impregnation steps, the carrier sheet was led into a drying installation, wherein the resin-pre-treated carrier sheet was dried until it showed a residual moisture content of approximately 6%.

At the upper side of this dried, resin-pre-treated carrier sheet a suspension with nano-particles was provided by means of a raster roller. This suspension related to a mixture of 40 wt% SiO₂ particles with an average grain size of 100 nanometers, 0,15wt% xanthan gum and 59,85wt% water and/or ethanol.

After applying the suspension, the treated carrier sheet was led back into the drying installation, where the residual moisture content was brought back to approximately 6%.

The thus obtained overlay, together with a resin-treated decor paper, was pressed on a HDL board by means of a DPL technique. By means of the same press treatment, a backing layer, which also consisted of a resin-soaked carrier sheet, was provided at the underside of the basic board.

The applied decor paper comprised a print representing the African dark wood species Wengé. This print was chosen because possible scratches usually will show as white in the top layer of a laminate floor panel and thus might be observed very quickly against the background of a dark printed decor.

The obtained laininate panel was subjected to the tests for scratch resistance described in the introduction and showed excellent results. Compared with a floor panel of the state of the art, in spite of the darker printed decor, a significantly higher pressure force had to be exerted onto the needle tip before a visually disturbing scratch developed. Also, the sponge test mentioned in the introduction resulted in little or no scratches.

It is clear that, when speaking about nano-particles, micro-particles or other particles with an average size situated in a certain interval, preferably it is obtained that the largest quantity of these particles, thus, at least 50 percent by weight of the total weight of particles, has a size situated within this interval.

For the determination of the average size of the particles, reference is made to the relevant standards. In general, it may be stated that according to the current methods for determining the average size of a powdery material, 50 percent by weight of the particles of this powdery material is larger or smaller than the average grain size of the respective material.

It is clear that the invention according to all its aspects preferably can be used with laminate floor panels or laminate furniture panels manufactured by means of the DPL technique mentioned in the introduction.

Further, it is clear that within the scope of the present invention according to all its aspects, by 'laminate' any kind of laminate is intended. Herein, this may relate, for example, to DPL as well as to HPL. Thus, a laminate top layer, which is present as a coating on said panels, floor panels or furniture panels, may comprise, independent of the application of the coated panel, any number of carrier sheets provided with resin. In a DPL top layer, this number even may be restricted to a single carrier sheet, which then preferably has a decor obtained by coloring or printing the respective carrier sheet.

It is noted that it is evident to those skilled in the art that there, where a printed decor or a print is mentioned, the invention according to all of its aspects may as well be applied for coated panels, which, instead of such decor or print, comprise a coloration, for example, in the form of at least one colored carrier sheet.

Further, it is evident to those skilled in the art that there, where material sheets or carrier sheets soaked in resin are mentioned, it suffices that such sheet is provided with resin. Also, it is clear that there, where hard particles that are or have been applied in the top layer at a location where, in the final panel, they are situated above the printed decor or coloration, however, are situated below said nano-particles or micro-particles applied by means of a suspension, it is intended that preferably at least the majority of these hard particles is situated below the majority of said nano-particles or micro-particles applied by means of a suspension.

Preferably, at least the hard particles applied by means of said suspension or dispersion are silane-treated, e.g. in accordance with EP 2 288 500 B1.

The present invention is in no way limited to the forms of embodiment described as an example and represented in the figures, on the contrary may such methods and coated panels be realized according to various variants without exceeding the scope of the invention.

## Claims

1. Method for manufacturing coated panels of the type having a top layer (1), which comprises at least one carrier sheet (3) soaked in resin (2) and a printed decor (6) or a coloration, wherein hard particles (9) are incorporated into the top layer (1), which are situated above said printed decor (6) or coloration, wherein the method comprises the step of providing a suspension or dispersion, which comprises at least a portion of said hard particles (9), at the upper side (7) of said carrier sheet (3), **characterized in that** said suspension or dispersion comprises xanthan gum.

2. The method of claim 1, **characterized in that** said hard particles are nano-particles (9).

3. The method of claim 1 and 2, **characterized in that** said carrier sheet is pre-treated with resin before said suspension is applied.

4. The method of any of the preceding claims, **characterized in that** said suspension or dispersion comprises 20 to 60 wt% of hard particles, such as silica particles, 20 to 60 wt% of water and/or ethanol and 0,02 to 0,5 wt% of xanthan gum.

5. Method according to any of the preceding claims, **characterized in that** for the hard particles (9) ceramic particles are used, preferably ceramic particles chosen from the group of aluminum oxide (Al203), silicon carbide (SiC), titanium oxide (TiO2), boron carbide (B4C), tungsten carbide (WC) and silicon dioxide (SiO2).

6. Method according to any of the preceding claims, **characterized in that** for the suspension (8) use is made of a suspension containing, apart from said nano-particles (9) and said xanthan gum, at least water.

7. Method according to claim 6, **characterized in that** for the suspension (8), use is made of a mixture of solids dissolved in water, wherein this mixture comprises at least 50 percent by weight nano-particles (9).

8. Method according to claim 6 or 7, **characterized in that** said mixture comprises less than 5 percent by weight of solid resin (2).

9. Method according to any of the preceding claims, **characterized in that** during the manufacture of the panel also hard particles (14) are provided in the top layer (1) at a location where they are situated in the final panel above the printed decor (6) or coloration, however, below said particles (9) applied by means of a suspension.

10. Method according to claim 9, **characterized in that** the hard particles (14) situated beneath the nano-particles (9) applied by means of a suspension (8) have a larger average size than these nano-particles (9), preferably with an average size between 20 and 200 micrometers and still better between 60 and 160 micrometers.

11. Method according to any of the preceding claims, **characterized in that** said carrier sheet (3) relates to a so-called overlay (4), which substantially consists of alpha cellulose and has a weight between 10 and 40 gram/m² and still better between 20 and 25 gram/m².

12. Method according to any of the claims 1 to 10, **characterized in that** said carrier sheet (3) has a print or coloration forming said printed decor (6) or coloration, wherein this carrier sheet (3) preferably is a paper sheet having a weight between 55 and 100 gram/m² and still better between 70 and 90 gram/m².

13. Method according to any of the preceding claims, **characterized in that** for the application of said suspension (8) comprising said hard particles (9), use is made of at least one of the following possibilities:
- a metering device;
- a spreading device at least by means of a knife;
- an application device with at least a wire doctor roll and/or raster roll;
- an application device with at least a so-called air knife;
- an application device by means of rolls and knives.

14. Method according to any of the preceding claims, **characterized in that** for the hard particles (9) particles are used with an average size between 20 and 700 nanometers, and still better between 50 and 200 nanometers.

15. Coated panel, **characterized in that** it is obtained or may be obtained by applying a method according to any of the claims 1 to 14, wherein this coated panel preferably relates to a floor panel or a furniture panel.
